(19) Europäisches Patentamt
European Patent Office
Office européen des brevets

(11) **EP 3 183 964 A1**

(12) **EUROPEAN PATENT APPLICATION**

(43) Date of publication:
**28.06.2017 Bulletin 2017/26**

(51) Int Cl.:
***A01N 25/02*** (2006.01)  ***A01N 25/32*** (2006.01)
***A01N 37/02*** (2006.01)  ***A01N 59/00*** (2006.01)
***A23B 7/00*** (2006.01)

(21) Application number: **16205226.0**

(22) Date of filing: **20.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **21.12.2015 IT UB20159626**

(71) Applicant: **Dall'Agata, Daniele**
**47121 Forli' (IT)**

(72) Inventor: **SALERNO, Pasquale**
**76123 Andria (BARLETTA) (IT)**

(74) Representative: **Rossetti, Elena**
**Bugnion S.p.A.**
**Viale Lancetti 17**
**20158 Milano (IT)**

(54) **COMPOSITION FOR USE IN AGRICULTURE**

(57)    The present invention relates to a composition for use in agriculture which comprises hydrogen peroxide, an acid/peracid mixture and an additive selected from among vegetable oils, animal oils and polyols capable of reducing the residues of plant protection products present on plants and fruit, without causing adverse reactions in the plant.

**EP 3 183 964 A1**

## Description

Field of the invention

The present invention relates to a composition for use in agriculture which comprises hydrogen peroxide, an acid/peracid mixture and an additive selected from among vegetable oils, animal oils and polyols capable of reducing the residues of plant protection products present on plants and fruit, without causing adverse reactions in the plant.

State of the art

Plant protection products are employed in agriculture to protect plants from harmful organisms or prevent the negative effects of the latter, or to influence the vital processes of plants, for example with the aim of favouring or hindering the growth thereof, depending on whether they are crops or weeds. Plant protection products (or pesticides) are generally classified based on their function; one thus speaks of bactericides, fungicides, insecticides, acaricides, plant growth regulators, etc.

The use of plant protection products in agriculture has led to enormous advantages in terms of crop productivity, which has resulted not only in economic benefits for farmers, but also in an important success in the fight against hunger and malnutrition in developing countries.

Plant protection products are generally administered by spraying on the crown, leaves and/or fruit. The active substances present in the plant protection products remain to a certain extent fixed on leaves and on fruit. Since such substances are often harmful for humans, the level of residues of plant protection products in foods is strictly regulated and monitored in order to protect consumers' health.

With regard to Italy, the analyses performed by the inspection body for the year 2013 on various foods intended for human consumption revealed that 44.5% of the foods analysed show residues of active ingredients present in the plant protection products. Of these, 24.5% consist of multi-residue samples, in which residues of different active ingredients are present, whereas 20% show residues of a single active ingredient (source: Italian Ministry of Health, results of the *Controllo ufficiale sui residui di prodotti fitosanitari negli alimenti -Official inspection on residues of plant protection products in foods-* for the year 2013).

Although the percentage of analysed samples which show residues exceeding the limits allowed by law is constantly decreasing both in Italy and at the Community level, it appears evident that there is a need in the agricultural sector to have treatment methods and compositions with a low environmental impact capable of further reducing the amount of residues of plant protection products in food products.

The Applicant has now found that a composition comprising hydrogen peroxide, an acid/peracid mixture and an additive selected from among vegetable oils, animal oils and polyols is capable of effectively and quickly reducing the amount of residues present on plants and/or fruit, essentially without causing adverse effects on the treated parts.

The composition can be used both for the treatment of crops in the field, for example by spraying, and for the post-harvest treatment of vegetables.

Summary of the invention

In a first aspect, the present invention relates to a composition for use in agriculture comprising:

(a) 7.0 - 30.0% by weight of hydrogen peroxide;
(b) 1.0 - 10.0% by weight of an $RCO_2H/RCO_3H$ mixture, wherein R is hydrogen or a C1-C12 aliphatic group, optionally substituted with -OH and/or -COOH groups;
(c) 0.5 - 40.0% by weight of at least one additive selected from among vegetable oil, animal oil and mixtures thereof; and
water.

In a further aspect, the present invention relates to the use of a composition comprising:

(a) 7.0 - 30.0% by weight of hydrogen peroxide;
(b) 1.0 - 10.0% by weight of an $RCO_2H/RCO_3H$ mixture, wherein R is hydrogen or a C1-C12 aliphatic group, optionally substituted with -OH and/or -COOH groups;
(c) 0.5 - 40.0% by weight of at least one additive selected from among vegetable oil, animal oil, C1-C10 aliphatic polyol and mixtures thereof; and water to 100% by weight
for reducing the amount of residues of plant protection products present on plants and/or fruit in the field and/or after harvest.

In a further aspect, the present invention relates to a method for reducing the amount of residues of plant protection products present on plants and/or fruit in the field comprising at least a step of spraying at least one plant and/or at least one fruit in the field with an aqueous solution comprising 0.1-0.5% by weight of a composition as described above.

In a further aspect, the present invention relates to a method for reducing the amount of residues of plant protection products present on plants and/or fruit after harvest comprising at least a step of immersing said at least one plant and/or at least one fruit in an aqueous solution comprising 0.1-0.5% by weight of the composition as described above.

Detailed description of the invention

In the present description and in the appended claims the percentages are understood as expressed by weight, unless specified otherwise.

In the present description and in the appended claims the term "aliphatic group" refers to a non-aromatic saturated or unsaturated linear or branched, cyclic or noncyclic, hydrocarbon.

In the present description and in the appended claims the terms "vegetable oil" and "animal oil" refer to the liquid fraction, respectively, of vegetable fats and animal fats.

In the present description and in the appended claims the term "aliphatic polyol" refers to an aliphatic group in which at least two hydrogen atoms are substituted with -OH groups.

In the present description and in the appended claims the term "$RCO_2H/RCO_3H$ mixture" refers to a mixture of an organic $RCO_2H$ acid and the associated $RCO_3H$ peracid.

In the present description and in the appended claims the term "residue of plant protection product" refers to a residue of the active ingredient(s) contained in a plant protection product and the most common degradation products thereof.

In a first aspect, the present invention relates to a composition for use in agriculture comprising:

(a) 7.0 - 30.0% by weight of hydrogen peroxide, preferably 12.0 - 20.0% by weight, more preferably 16.0 - 19.0% by weight;
(b) 1.0 - 10.0% by weight, preferably 2.0 - 8.0% by weight, of a $RCO_2H/RCO_3H$ mixture, wherein R is hydrogen or a C1-C12 aliphatic group, optionally substituted with -OH and/or -COOH groups;
(c) 0.5 - 40.0% by weight, preferably 3.0 - 30.0% by weight, more preferably 7.0 - 20.0% by weight, of at least one additive selected from among vegetable oil, animal oil and mixtures thereof; and
water to 100% by weight.

In a first variant, the composition according to the invention can comprise an $RCO_2H/RCO_3H$ mixture, wherein the $RCO_2H/RCO_3H$ molar ratio is comprised between 0.1:1 and 4:1, preferably between 2:1 and 3:1. The value of the $RCO_2H/RCO_3H$ ratio depends on the final use of the composition.

In a further variant, the composition of the invention can comprise an $RCO_2H/RCO_3H$ mixture wherein the $RCO_2H$ acid is selected from among acetic acid, citric acid, lactic acid, malic acid, formic acid, propanoic acid, butanoic acid, pentanoic acid, hexanoic acid, heptanoic acid, octanoic acid, nonanoic acid, decanoic acid and undecanoic acid and the $RCO_3H$ peracid is selected from among the peracids corresponding to the above-described acids.

According to one embodiment, the composition of the invention can comprise an $RCO_2H/RCO_3H$ mixture wherein the $RCO_2H$ acid is selected from among acetic acid, citric acid and malic acid and the $RCO_3H$ peracid is selected from among the peracids corresponding to the above-described acids. Preferably, the composition can comprise an acetic acid/peracetic acid mixture.

According to a further embodiment, the composition according to the invention can comprise a plurality of $RCO_2H/RCO_3H$ mixtures wherein the $RCO_2H$ acid and the $RCO_3H$ peracid are as described above.

According to a further variant, the composition of the invention can comprise at least one vegetable oil for food use; more preferably said oil can be selected from among palm oil, olive oil, peanut oil, corn seed oil, sunflower seed oil, rapeseed oil, sesame oil, coconut oil, linseed oil, walnut oil, rice oil, hemp seed oil, soybean oil and mixtures thereof. More preferably, the composition can comprise palm oil.

According to a further variant, the composition of the invention can comprise an animal oil selected from among cod liver oil, whale oil, sperm whale oil and mixtures thereof.

When used in the treatment of plants and/or fruit, the composition according to the invention is capable of decreasing the amount of residues of plant protection products present on the treated parts and has a sanitising effect thanks to the presence of peroxides. Moreover, the composition of the invention is capable of performing its function while minimising or eliminating the adverse effects on the treated parts, thanks to the presence of the particular additive as described above.

The composition according to the invention can further comprise adjuvant substances or products, such as, for example, surfactants, wetting agents, adhesion promoting agents, etc., known per se in the art.

In one embodiment, the composition according to the invention can further comprise at least one nutrient element selected from among nitrogen (of ureic, nitrate or ammonia origin), phosphorous, potassium, calcium, magnesium, boron, manganese, molybdenum, zinc and mixtures thereof, preferably from among nitrogen (of ureic, nitrate or ammonia origin), zinc and mixtures thereof. The total amount of the at least one nutrient element can be comprised between 1 and 25% by weight, preferably between 1 and 20% by weight, more preferably between 1 and 15% by weight.

The composition according to the invention can be prepared by mixing the various components, in any order, at ambient temperature and pressure, by means of a continuous or, preferably, discontinuous process. Mixing of the components can last for up to 7 days, depending on the amount of additive present in the mixture.

The components can be fed to a reactor and placed under stirring for a period of time ranging between 6 and 60 hours, preferably for 24-48 hours. The hydrogen peroxide is generally introduced into the composition in the form of a concentrated aqueous solution. The $RCO_2H/RCO_3H$ mixture is generally introduced into the composition according to the invention in the form of an aqueous solution stabilised with variable amounts of hydrogen peroxide. The percentages of hydrogen peroxide present in the solution can thus refer to the sum of the hydrogen peroxide added as an aqueous solution and the hydrogen peroxide present as a stabiliser in the $RCO_2H/RCO_3H$ mixture.

The composition of the invention is highly effective in reducing the residues of plant protection products present on plants and/or fruit, minimising or eliminating the adverse effects on the treated vegetation and/or fruit.

The plants treated with the composition according to the invention do not show on the leaf edge the typical lesions similar to burns which occur with the use of a composition with an equal concentration of hydrogen peroxide and oxide/peroxide mixture but without the additive described above. Similarly, the fruit treated with the composition of the invention is not deteriorated by contact with the composition according to the invention. This particular property thus makes it possible to use, for the treatment of plants and/or fruit, a composition according to the invention with a high concentration of hydrogen peroxide and/or of $RCO_2H/RCO_3H$ mixture, which is thus more effective in reducing residues of plant protection products.

The composition according to the invention can moreover be used for repeated treatment of plants and/or fruit.

In a further aspect, the invention relates to the use of a composition comprising:

(a) 7.0 - 30.0% by weight of hydrogen peroxide;
(b) 1.0 - 10.0% by weight of an $RCO_2H/RCO_3H$ mixture, wherein R is hydrogen or a C1-C12 aliphatic group, optionally substituted with -OH and/or -COOH groups;
(c) 0.5 - 40.0% by weight of at least one additive selected from among vegetable oil, animal oil, C1-C10 aliphatic polyol and mixtures thereof; and water to 100% by weight
for reducing the amount of residues of plant protection products present on plants and/or fruit in the field and/or after harvest.

The components (a), (b) and (c) are as described above. According to one embodiment, the composition can comprise a C1-C10 aliphatic polyol selected from among ethylene glycol, glycerol, sorbitol and mixtures thereof.

The composition according to the invention can be used for the treatment of the aerial part of the plants and/or for the treatment of fruit in the field by spraying, preferably with industrial or professional sprayers.

In a further aspect, the present invention relates to a method for reducing the amount of residues of plant protection products present on plants and/or fruit in the field comprising at least a step of spraying at least one plant and/or at least one fruit in the field with an aqueous solution comprising 0.1-0.5% by weight of a composition as described above.

In a first variant, in the at least a spraying step, said aqueous solution can be sprayed in amounts comprised between 300 and 1500 l/ha, preferably between 1000 and 1500 l/ha.

The concentration of the aqueous solution and the amount of solution to be sprayed depend on the degree of reduction of the residues of plant protection products it is desired to obtain, the type of spraying that is carried out and the type of plant and/or fruit it is intended to treat. According to a further variant, the aqueous solution is allowed to act on the plant and/or fruit for a period of time comprised between 24 and 96 hours, depending on the outdoor temperature. Subsequently, the treated plant and/or fruit can be harvested and sent off for subsequent processing steps.

If the amount of residues of plant protection products is high, it is possible to perform a plurality of treatments according to the method described above.

The method according to the invention is particularly effective for the treatment of leaves and fruit of fruit trees (in particular stone fruit, pome fruit, kiwis and citrus fruit), and of small horticultural crops in open fields and greenhouses.

In a further aspect, the present invention relates to a method for reducing the amount of residues of plant protection products present on plants and/or fruit after harvest comprising at least a step of immersing said at least one plant and/or at least one fruit in an aqueous solution comprising 0.1-0.5% by weight of the composition as described above.

In one variant, the immersion step can have a duration comprised between 1 minute and 240 minutes (4 hours).

The post-harvest method of treating plants and/or fruit according to the invention can serve to reduce residues of plant protection products in peeled fruit and/or fruit that is eaten with the peel on, such as, for example, apples, apricots, cherries, peaches, strawberries, berries, etc., or for the preparation of "ready-to-eat products" (i.e. products that are packaged and ready to be consumed).

The post-harvest treatment of plants and/or fruit according to the invention can also be carried out on plants and/or fruit already previously treated in the field according to the method described above.

The present invention will be illustrated below with the experimental part that follows, but without limiting the scope thereof.

In the examples that follow, the percentage reduction of each residue is calculated according to the formula wherein

$$Reduction\ \% = \frac{NOT\ treated - treated}{NOT\ treated}\ x\ 100$$

NOT treated = concentration of the analyte (residue) in the sample not treated with the composition according to the invention;

treated = concentration of the analyte (residue) in the sample treated with a composition according to the invention.

The fruit trees used for the experimentation were treated with plant protection products in an amount and with the methods normally used in the sector for each species.

Example 1: Treatment of fruit trees in the field, apple species

A portion of an apple orchard, Rosy Glow variety, was treated with an aqueous solution containing 0.25% by weight of a composition comprising:

(a) 17.5 % by weight of $H_2O_2$;
(b) 15.0% by weight of a $CH_3COOH/CH_3COOOH$ mixture;
(c) 10.0 % by weight of palm oil;
and water to 100% by weight.

The aerial part of the trees was sprayed with about 1000 l/ha of aqueous solution by means of a professional sprayer. Sampling of the fruit took place about 72 hours after spraying.

Table 1 shows the results of the multi-residue analyses performed according to standard UNI EN 15662:2009 on the samples of treated fruit and, by way of comparison, the results of the analyses performed on samples of fruit picked in the untreated portion of the orchard.

At the time of harvesting, the treated fruit showed no surface defects attributable to the treatment carried out.

**Table 1**

| Analyte | Treated | NOT treated | % Reduction |
|---------|---------|-------------|-------------|
|         | ppm |  |  |
| Captan | 0.04 | 0.11 | 63.6 |
| Boscalid | 0.03 | 0.09 | 66.7 |
| Phosmet | 0.02 | 0.03 | 33.3 |

Example 2: Treatment of fruit trees in the field, apple species

Tests were performed on two portions of apple orchards situated in two different farms (Farm 1 and Farm 2). Each portion was treated with an aqueous solution containing 0.35% by weight of a composition as described in example 1.

The aerial part of the trees was sprayed with about 1000 l/ha of aqueous solution by means of a professional sprayer. Sampling of the fruit took place about 72 hours after spraying.

Table 2 shows the results of the multi-residue analyses performed according to standard UNI EN 15662:2009 on the samples of treated fruit (Tr) and, by way of comparison, the results of the analyses performed on samples of fruit picked in the untreated portion of the orchard (test).

At the time of harvesting, the treated fruit showed no surface defects attributable to the treatment carried out.

**Table 2**

| Analyte | Farm 1 | | | Farm 2 | | |
|---|---|---|---|---|---|---|
| | TR | TEST | Red. % | TR | TEST | Red.% |
| Boscalid | 0.16 | 0.18 | 11.1 | 0.15 | 0.28 | 46.4 |
| Dithianon | 0.05 | 0.09 | 44.4 | 0.03 | 0.04 | 25.0 |
| Pyraclostrobin | 0.12 | 0.18 | 33.3 | 0.11 | 0.22 | 50.0 |

Example 3: Treatment of fruit trees in the field, peach species

A portion of a nectarine orchard, Laura variety, previously treated with plant protection products, was sprayed by means of an industrial sprayer with about 1000 l/ha of an aqueous solution containing 0.25% by weight of a composition comprising:

(a) 17.5% by weight of $H_2O_2$;
(b) 10.0% by weight of a $CH_3COOH/CH_3COOOH$ mixture;
(c) 10.0% by weight of palm oil;
(d) 2% by weight of Zn, in the form of zinc oxide
and water to 100% by weight.

Sampling and analysis of the fruit took place about 72 hours after spraying.

Table 3 shows the results of the multi-residue analyses performed according to standard UNI EN 15662:2009 on the samples of treated fruit and, by way of comparison, the results of the analyses performed on samples of fruit picked in the untreated portion of the orchard.

At the time of harvesting, the treated fruit showed no surface defects (burns, etc.) attributable to the treatment carried out.

**Table 3**

| | Treated | NOT treated | % Reduction |
|---|---|---|---|
| | mg/Kg | | |
| Tebuconazole | 0.009 | 0.017 | 47.1 |
| Etofenprox | 0.030 | 0.084 | 64.3 |
| Fluopyram | 0.035 | 0.048 | 27.1 |

Example 4: Treatment of fruit trees in the field, apricot species

A portion of an apricot orchard, previously treated with plant protection products, was sprayed, by means of an industrial sprayer, with about 1000 l/ha of an aqueous solution containing 0.25% by weight of a composition as described in the Example 3. Sampling and analysis of the fruit were carried out about 48 hours after spraying.

Table 4 shows the results of the multi-residue analyses performed according to standard UNI EN 15662:2009 on the samples of treated fruit and, by way of comparison, the results of the analyses performed on samples of fruit picked in the untreated portion of the orchard.

At the time of harvesting, the treated fruit showed no surface defects (burns, etc.) attributable to the treatment carried out.

**Table 4**

| | Treated | NOT Treated | % Reduction |
|---|---|---|---|
| | mg/Kg | | |
| Boscalid | 0.055 | 0.07 | 21.4 |
| Chlorantraniliprole | <0.005 | 0.214 | >95 |
| Myclobutanil | 0.04 | 0.104 | 61.5 |
| Pyraclostrobin | 0.011 | 0.011 | 0.0 |
| Thiacloprid | 0.012 | 0.014 | 14.3 |

Example 5: Treatment of fruit trees in the field, pear species

A portion of a pear orchard, Abate cultivar, previously subjected to a treatment with plant protection products, was sprayed, by means of an industrial sprayer, with about 1000 l/ha of an aqueous solution containing 0.25% by weight of a composition comprising:

(a) 17.5% by weight of $H_2O_2$;
(b) 10.0% by weight of a $CH_3COOH/CH_3COOOH$ mixture;
(c) 10.0 % by weight of palm oil;
(d) 15% by weight of nitrogen, in the form of ureic nitrogen
and water to 100% by weight.

Sampling and analysis of the fruit took place about 72 hours after spraying.
Table 5 shows the results of the multi-residue analyses performed according to standard UNI EN 15662:2009 on the samples of treated fruit and, by way of comparison, the results of the analyses performed on samples of fruit picked in the untreated portion of the orchard.
At the time of harvesting, the treated fruit showed no surface defects (burns, etc.) attributable to the treatment carried out.

**Table 5**

| | Treated | NOT Treated | % Reduction |
|---|---|---|---|
| | mg/Kg | | |
| Captan | 0.106 | 0.950 | 88.8 |
| Etofenprox | 0.024 | 0.030 | 20.0 |
| Phosmet | 0.030 | 0.140 | 78.6 |
| Acetamiprid | 0.028 | 0.027 | 0.0 |
| Dithiocarbamate Fungicides (like $CS_2$) | <0.010 | 0.020 | >50.0 |

Example 6: Treatment in the field, tomato species

A tomato orchard was treated with a crop protection product in an amount of about 3 l/ha. 5 days after the treatment with the crop protection product, the leaves and fruit present in a portion of the orchard were sprayed with about 1000 l/ha of an aqueous solution containing 0.25% by weight of a composition as described in the Example 3. Sampling and analysis of the fruit took place about 72 hours after spraying.
Table 6 shows the results of the multi-residue analyses performed according to standard UNI EN 15662:2009 on the samples of treated fruit and, by way of comparison, the results of the analyses performed on samples of fruit picked in the untreated portion of the orchard.

**Table 6**

|  | Treated | NOT Treated | % Reduction |
|---|---|---|---|
|  | mg/Kg | | |
| Azoxystrobin | 0.017 | 0.03 | 43.3 |
| Dimethomorph | 0.046 | 0.063 | 27.0 |
| Pyraclostrobin | 0.027 | 0.029 | 6.9 |
| Copper (as Cu) | 1.025 | 1.293 | 20.7 |

At the time of harvesting, the treated fruit showed no visible surface defects (burns, etc.) attributable to the treatment carried out.

Example 7: Treatment of fruit trees in the field, apple species

A portion of an apple orchard, Devil Gala cultivar, previously subjected to a treatment with plant protection products, was subject to two successive sprayings 3 days apart, each of which was carried out with about 1000 l/ha of an aqueous solution containing 0.25% by weight of a composition comprising:

(a) 19% by weight of $H_2O_2$;
(b) 10% by weight of a corresponding malic acid/peracid mixture;
(c) 10% by weight of palm oil;
(d) 15% by weight of nitrogen, in the form of ureic nitrogen
and water to 100% by weight.

Sampling and analysis of the fruit took place about 72 hours after spraying.
Table 7 shows the results of the multi-residue analyses performed according to standard UNI EN 15662:2009 on the samples of treated fruit and, by way of comparison, the results of the analyses performed on samples of fruit picked in the untreated portion of the orchard.

**Table 7**

|  | Treated | NOT Treated | % Reduction |
|---|---|---|---|
|  | mg/Kg | | |
| Captan | <0.01 | 0.040 | >75 |
| Phosmet | 0.010 | 0.010 | 0.0 |
| Dithianon | 0.020 | 0.030 | 33.3 |

The treated fruit showed no surface damage due to the treatment carried out.

Example 8: Treatment of fruit trees in the field, pear species

A portion of a pear orchard, Abate Fétel cultivar, previously subjected to a treatment with plant protection products, was sprayed, by means of an industrial sprayer, with about 1000 l/ha of an aqueous solution containing 0.25% by weight of a composition comprising:

(a) 19% by weight of $H_2O_2$;
(b) 10% by weight of a corresponding lactic acid/peracid mixture;
(c) 10 % by weight of palm oil;
(d) 15% by weight of nitrogen, in the form of ureic nitrogen
and water to 100% by weight.

Sampling and analysis of the fruit took place about 72 hours after spraying.
Table 8 shows the results of the multi-residue analyses performed on the samples of treated fruit and, by way of comparison, the results of the analyses performed on samples of fruit picked in the untreated portion of the orchard.

**Table 8**

| | Treated | NOT Treated | % Reduction | Analytica l Method |
|---|---|---|---|---|
| | mg/Kg | | | |
| Boscalid | 0.15 | 0.26 | 42.3 | UNI15662 |
| Captan | 0.19 | 0.53 | 64.2 | UNI15662 |
| Iprodione | 0.05 | 0.16 | 68.8 | UNI15662 |
| Dithiocarbamate Fungicides (like $CS_2$) | 0.09 | 0.42 | 78.6 | UNI12396 |

At the time of harvesting, the treated fruit showed no surface defects (burns, etc.) attributable to the treatment carried out.

Example 9: Treatment of fruit trees in the field, pear species

A portion of a pear orchard, Abate Fétel cultivar, previously subjected to a treatment with plant protection products, was sprayed, by means of an industrial sprayer, with about 1000 l/ha of an aqueous solution containing 0.25% by weight of a composition comprising:

(a) 19% by weight of $H_2O_2$;
(b) 10% by weight of a corresponding citric acid/peracid mixture;
(c) 10% by weight of palm oil;
(d) 2% by weight of Zn, in the form of zinc oxide;
and water to 100% by weight.

Sampling and analysis of the fruit took place about 72 hours after spraying.

Table 9 shows the results of the multi-residue analyses performed on the samples of treated fruit and, by way of comparison, the results of the analyses performed on samples of fruit picked in the untreated portion of the orchard.

**Table 9**

| | Treated | NON Treated | % Reduction |
|---|---|---|---|
| | mg/Kg | | |
| Acetamiprid | 0.012 | 0.027 | 55.6 |
| Boscalid | 0.457 | 0.652 | 29.9 |
| Captan | 0.117 | 0.29 | 59.7 |
| Clorantraniliprole | 0.014 | 0.028 | 50.0 |
| Chlorpyrifosmethyl | <0.005 | 0.012 | > 58 |
| Phosmet | 0.01 | 0.014 | 28.6 |
| Thiamethoxam (sum) | 0.021 | 0.031 | 32.3 |
| Dithiocarbamates (CS2) | 0.214 | 0.518 | 58.7 |
| Fosetyl aluminium | 7.27 | 14.6 | 50.2 |

At the time of harvesting, the treated fruit showed no surface defects (burns, etc.) attributable to the treatment carried out.

Example 10: Treatment of fruit after harvest, kiwi species

Some kiwis treated with plant protection products according to the practice normally used in agriculture were picked and subsequently immersed at ambient temperature for about 1 minute in an aqueous solution containing 0.25% by weight of a composition as described in the Example 3.

After the treatment, the fruit was left to air dry at ambient temperature and pressure and subsequently sent off for analysis, which was carried out about 72 hours after the treatment.

Table 10 shows the results of the multi-residue analyses performed on the samples of treated fruit and, by way of comparison, the results of the analyses performed on samples of fruit not subjected to any treatment after harvest.

**Table 10**

| | Treated | NOT Treated | % Reduction | Analytical Method |
|---|---|---|---|---|
| | mg/Kg | | | |
| Forchlorfenuron | 0.03 | 0.04 | 43.2 | (1) |
| Phosphorous acid | 0.81 | 4.10 | 80.2 | (2) |
| Fosetyl | <0.01 | 0.06 | >80 | (2) |
| Fosetyl aluminium | 0.10 | 5.60 | 98.2 | (2) |
| (1) UNI EN12396-2:1999;<br>(2) CVUA EU-RL-SRM QuPPe Vers. 8.1 - Method 1.3 2015 | | | | |

The fruit immersed in the treatment solution showed no visible damage due to the treatment.

Example 11: Treatment of fruit after harvest, apple species

Some apples treated with plant protection products according to the practice normally used in agriculture were picked and subjected to a treatment as indicated in Example 10.

After the treatment, the fruit was left to air dry at ambient temperature and pressure and subsequently sent off for analysis, which was carried out about 72 hours after the treatment.

Table 11 shows the results of the multi-residue analyses performed on the samples of treated fruit and, by way of comparison, the results of the analyses performed on samples of fruit not subjected to any treatment after harvest.

The fruit immersed in the treatment solution showed no visible damage due to the treatment.

**Table 11**

| | Treated | NOT Treated | % Reduction | Analytical Method |
|---|---|---|---|---|
| | mg/Kg | | | |
| Dithiocarbamate Fungicides (like $CS_2$) | 0.028 | 0.04 | 30.0 | (1) |
| Phosphorous acid | 0.19 | 0.59 | 67.8 | (2) |
| Fosetyl | <0.01 | 0.012 | > 16.0 | (1) |
| Fosetyl aluminium | 0.26 | 0.8 | 67.5 | (2) |
| Boscalid | 0.056 | 0.076 | 26.3 | (1) |
| Chlorantraniliprole | <0.005 | 0.056 | >90.0 | (1) |
| Chilorpyrifos | 0.016 | 0.025 | 36.0 | (1) |
| Deltamethrin | <0.005 | 0.01 | >50.0 | (1) |
| Dithianon | 0.2 | 0.25 | 20.0 | (1) |
| Etofenprox | 0.14 | 0.17 | 17.6 | (1) |
| Pyraclostrobin | <0.005 | 0.018 | >70.0 | (1) |
| Tau-fluvalinate | 0.04 | 0.061 | 34.4 | (1) |
| Tebuconazole | 0.047 | 0.12 | 60.8 | (1) |
| Thiacloprid | 0.013 | 0.05 | 74.0 | (1) |
| (1) UNI EN12396-2:1999;<br>(2) CVUA EU-RL-SRM QuPPe Vers. 8.1 - Method 1.3 2015 | | | | |

**Claims**

1.  A composition for use in agriculture comprising:

    (a) 7.0 - 30.0% by weight of hydrogen peroxide;
    (b) 1.0 - 10.0% by weight of an $RCO_2H/RCO_3H$ mixture, wherein R is hydrogen or a C1-C12 aliphatic group, optionally substituted with -OH and/or -COOH groups;
    (c) 0.5 - 40.0% by weight of at least one additive selected from among vegetable oil, animal oil and mixtures thereof; and
    water.

2.  The composition according to claim 1, comprising an $RCO_2H/RCO_3H$ mixture, wherein the $RCO_2H$ acid is selected from among acetic acid, citric acid, lactic acid, malic acid, formic acid, propanoic acid, butanoic acid, pentanoic acid, hexanoic acid, heptanoic acid, octanoic acid, nonanoic acid, decanoic acid and undecanoic acid and the $RCO_3H$ peracid is selected from among the peracids corresponding to the above-described acids.

3.  The composition according to claim 1 or 2, wherein the $RCO_2H/RCO_3H$ molar ratio is comprised between 0.1:1 and 4:1, preferably between 2:1 and 3:1.

4.  The composition according to any one of claims 1-3, wherein the additive is selected from among palm oil, olive oil, peanut oil, corn seed oil, sunflower seed oil, rapeseed oil, sesame oil, coconut oil, linseed oil, walnut oil, rice oil, hemp seed oil, soybean oil and mixtures thereof, preferably palm oil.

5.  The composition according to any one of claims 1-4, comprising an acetic acid/peracetic acid mixture.

6.  The composition according to any one of claims 1-5, further comprising at least one nutrient element selected from among nitrogen, phosphorous, potassium, calcium, magnesium, boron, manganese, molybdenum, zinc and mixtures thereof, preferably from among nitrogen (of ureic, nitrate or ammonia origin), zinc and mixtures thereof.

7.  Use of a composition comprising

    (a) 7.0 - 30.0% by weight of hydrogen peroxide;
    (b) 1.0 - 10.0% by weight of an $RCO_2H/RCO_3H$ mixture, wherein R is hydrogen or a C1-C12 aliphatic group, optionally substituted with -OH and/or -COOH groups;
    (c) 0.5 - 40.0% by weight of at least one additive selected from among vegetable oil, animal oil, C1-C10 aliphatic polyol and mixtures thereof; and
    water to 100% by weight
    for reducing the amount of residues of plant protection products present on plants and/or fruit in the field and/or after harvest.

8.  Use according to claim 7, wherein the composition comprises an $RCO_2H/RCO_3H$ mixture wherein the $RCO_2H$ acid is selected from among acetic acid, citric acid, lactic acid, malic acid, formic acid, propanoic acid, butanoic acid, pentanoic acid, hexanoic acid, heptanoic acid, octanoic acid, nonanoic acid, decanoic acid and undecanoic acid and the $RCO_3H$ peracid is selected from among the peracids corresponding to the above-described acids.

9.  Use according to claim 7 or 8, wherein the composition comprises an acetic acid/peracetic acid mixture.

10. Use according to any one of claims 7-9, wherein the composition comprises an $RCO_2H/RCO_3H$ mixture, wherein the $RCO_2H/RCO_3H$ molar ratio is comprised between 0.1:1 and 4:1, preferably between 2:1 and 3:1.

11. Use according to any one of claims 7-10, wherein the composition comprises at least one additive selected from among palm oil, olive oil, peanut oil, corn seed oil, sunflower seed oil, rapeseed oil, sesame oil, coconut oil, linseed oil, walnut oil, rice oil, hemp seed oil, soybean oil and mixtures thereof, preferably palm oil.

12. Use according to any one of claims 7-11, wherein the composition further comprises at least one nutrient element selected from among nitrogen, phosphorous, potassium, calcium, magnesium, boron, manganese, molybdenum, zinc and mixtures thereof, preferably selected from among nitrogen (of ureic, nitrate or ammonia origin), zinc and mixtures thereof.

13. A method for reducing the amount of residues of plant protection products present on plants and/or fruit in the field, comprising at least a step of spraying at least one plant and/or at least one fruit in the field with an aqueous solution comprising 0.1 - 0.5% by weight, preferably 0.2 - 0.4% by weight, of the composition according to any one of claims 7 to 12.

14. The method according to claim 13, wherein said aqueous solution is sprayed in amounts comprised between 300 and 1500 l/ha, preferably between 1000 and 1500 l/ha.

15. A method for reducing the amount of residues of plant protection products present on plants and/or fruit after harvest, comprising at least a step of immersing at least one plant and/or at least one fruit in an aqueous solution comprising 0.1-0.5% by weight of the composition according to any one of claims 7 to 12.

Europäisches
Patentamt

European
Patent Office

Office européen
des brevets

# EUROPEAN SEARCH REPORT

Application Number

EP 16 20 5226

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/037294 A2 (PIMI AGRO CLEANTECH LTD ISRAEL [IL]; CARMEL ALON [US]; BEN YEHUDA NIMR) 22 March 2012 (2012-03-22) | 13-15 | INV.<br>A01N25/02<br>A01N25/32 |
| Y | * paragraphs [0003], [0005], [0007], [0008], [0012], [0014], [0015], [0051], [0059] - [0062], [0074], [0075], [0079] *<br>* examples 1, 4, 12 *<br>----- | 1-12 | A01N37/02<br>A01N59/00<br>A23B7/00 |
| A | US 2004/143133 A1 (SMITH KIM R [US] ET AL) 22 July 2004 (2004-07-22)<br>* paragraphs [0001], [0002], [0007] - [0010], [0030] - [0031], [0037] - [0040], [0074] - [0075], [0078] - [0080], [0125], [0129] *<br>----- | 1-15 | |
| A | WO 98/11777 A1 (COTTRELL LTD [US]) 26 March 1998 (1998-03-26)<br>* page 1, line 4 - line 24 *<br>* page 3, line 13 - page 4, line 12 *<br>* page 5, line 5 - line 18 *<br>* page 6, line 28 - page 7, line 6 *<br>* example 1 *<br>----- | 1-15 | |
| X | US 2009/192231 A1 (LEMONS KEL EUGENE [US]) 30 July 2009 (2009-07-30) | 13-15 | TECHNICAL FIELDS SEARCHED (IPC)<br><br>A01N<br>A23B<br>A23L |
| Y | * paragraphs [0007] - [0009], [0045] - [0049], [0072], [0077] *<br>* tables 1, 2 *<br>* paragraphs [0085], [0183] *<br>* tables 6,7 *<br>-----<br>-/-- | 1-12 | |

The present search report has been drawn up for all claims

| Place of search | Date of completion of the search | Examiner |
|---|---|---|
| Munich | 3 March 2017 | Bueno Torres, Pilar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 4

**EUROPEAN SEARCH REPORT**

Europäisches Patentamt
European Patent Office
Office européen des brevets

Application Number

EP 16 20 5226

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 03/045144 A1 (WESSOLLEK HEIMO JOERG [CH]) 5 June 2003 (2003-06-05) <br> * page 1, paragraph 1-3 * <br> * page 4, paragraph 1-5 * <br> * page 6, paragraph 3 - page 7, paragraph 4 * <br> * tables 31, 33 * | 1-15 | |
| A | WO 2015/125115 A1 (KOLLADATH MOHANAN [IN]) 27 August 2015 (2015-08-27) <br> * paragraphs [0002] - [0004], [0006] * <br> * table 1 * <br> * paragraph [0019] * <br> * examples 1-3 * | 1-15 | |
| X | MEHMET FATIH CENGIZ ET AL: "Effects of chlorine, hydrogen peroxide, and ozone on the reduction of mancozeb residues on tomatoes", TURKISH JOURNAL OF AGRICULTURE AND FORESTRY, vol. 38, 1 January 2014 (2014-01-01), pages 371-376, XP055350823, TR ISSN: 1300-011X, DOI: 10.3906/tar-1307-14 * Fig. 2 * | 1-15 | TECHNICAL FIELDS SEARCHED (IPC) |

-/--

The present search report has been drawn up for all claims

| Place of search | Date of completion of the search | Examiner |
|---|---|---|
| Munich | 3 March 2017 | Bueno Torres, Pilar |

EPO FORM 1503 03.82 (P04C01)

Europäisches
Patentamt

European
Patent Office

Office européen
des brevets

# EUROPEAN SEARCH REPORT

Application Number

EP 16 20 5226

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PUGLIESE P ET AL: "Gas chromatographic evaluation of pesticide residue contents in nectarines after non-toxic washing treatments", JOURNAL OF CHROMATOGRAPHY A, ELSEVIER, AMSTERDAM, NL, vol. 1050, no. 2, 1 October 2004 (2004-10-01), pages 185-191, XP004572506, ISSN: 0021-9673, DOI: 10.1016/J.CHROMA.2004.08.032 * Tables 1-4 * | 1-15 | |
| X | RADWAN M A ET AL: "Residual behaviour of profenofos on some field-grown vegetables and its removal using various washing solutions and household processing", FOOD AND CHEMICAL TOXICOLOGY, PERGAMON, GB, vol. 43, no. 4, 1 April 2005 (2005-04-01), pages 553-557, XP027602459, ISSN: 0278-6915 [retrieved on 2005-04-01] * Table 3 * | 1-15 | TECHNICAL FIELDS SEARCHED (IPC) |
| X | A.A.K ABOU-ARAB: "Behavior of pesticides in tomatoes during commercial and home preparation", FOOD CHEMISTRY, vol. 65, no. 4, 1 June 1999 (1999-06-01), pages 509-514, XP055350827, NL ISSN: 0308-8146, DOI: 10.1016/S0308-8146(98)00231-3 * Tables 3-4 * | 1-15 | |

-/--

The present search report has been drawn up for all claims

| Place of search | Date of completion of the search | Examiner |
|---|---|---|
| Munich | 3 March 2017 | Bueno Torres, Pilar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 16 20 5226

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | A Zohair: "Brief Communication Behaviour of some organophosphorus and organochlorine pesticides in potatoes during soaking in different solutions", Food and Chemical Toxicology, volume 39, issue 7, 1 July 2001 (2001-07-01), pages 751-755, XP055350828, Retrieved from the Internet: URL:http://ac.els-cdn.com/S027869150100016 3/1-s2.0-S0278691501000163-main.pdf?_tid=f 83cb76a-fead-11e6-b6e3-00000aab0f26&acdnat =1488393563_c2528c3548837077ac6a68a9c2d325 0d [retrieved on 2017-03-01] * Tables 2-3 * | 1-15 | |
| X | EUN-SUN HWANG ET AL: "Postharvest Treatments for the Reduction of Mancozeb in Fresh Apples", JOURNAL OF AGRICULTURAL AND FOOD CHEMISTRY, vol. 49, no. 6, 1 June 2001 (2001-06-01), pages 3127-3132, XP055351117, US ISSN: 0021-8561, DOI: 10.1021/jf010234h * Figures 4-6 * | 1-15 | TECHNICAL FIELDS SEARCHED (IPC) |

The present search report has been drawn up for all claims

| Place of search | Date of completion of the search | Examiner |
|---|---|---|
| Munich | 3 March 2017 | Bueno Torres, Pilar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 20 5226

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2017

| Patent document cited in search report | | Publication date | Patent family member(s) | | Publication date |
|---|---|---|---|---|---|
| WO 2012037294 | A2 | 22-03-2012 | EP 2615932 | A2 | 24-07-2013 |
| | | | US 2013203849 | A1 | 08-08-2013 |
| | | | WO 2012037294 | A2 | 22-03-2012 |
| US 2004143133 | A1 | 22-07-2004 | US 2004143133 | A1 | 22-07-2004 |
| | | | US 2010022644 | A1 | 28-01-2010 |
| | | | WO 2004067485 | A2 | 12-08-2004 |
| WO 9811777 | A1 | 26-03-1998 | AU 4419597 | A | 14-04-1998 |
| | | | BR 9712070 | A | 15-01-2002 |
| | | | CA 2266535 | A1 | 26-03-1998 |
| | | | EP 0957683 | A1 | 24-11-1999 |
| | | | JP 2001506971 | A | 29-05-2001 |
| | | | US 5900256 | A | 04-05-1999 |
| | | | WO 9811777 | A1 | 26-03-1998 |
| US 2009192231 | A1 | 30-07-2009 | AU 2008349813 | A1 | 13-08-2009 |
| | | | BR PI0822104 | A2 | 07-10-2014 |
| | | | CA 2712678 | A1 | 13-08-2009 |
| | | | DE 112008003663 | T5 | 30-12-2010 |
| | | | EP 2249653 | A2 | 17-11-2010 |
| | | | GB 2469245 | A | 06-10-2010 |
| | | | NZ 586994 | A | 29-06-2012 |
| | | | US 2009192231 | A1 | 30-07-2009 |
| | | | US 2013216432 | A1 | 22-08-2013 |
| | | | US 2016088846 | A1 | 31-03-2016 |
| | | | WO 2009099419 | A2 | 13-08-2009 |
| WO 03045144 | A1 | 05-06-2003 | AU 2002350397 | A1 | 10-06-2003 |
| | | | EP 1448055 | A1 | 25-08-2004 |
| | | | WO 03045144 | A1 | 05-06-2003 |
| WO 2015125115 | A1 | 27-08-2015 | NONE | | |

EPO FORM P0459

For more details about this annex : see Official Journal of the European Patent Office, No. 12/82